# EUROPEAN PATENT APPLICATION

(11) **EP 2 404 756 A1**
(43) Date of publication of application: **11.01.2012**
(21) Application number: 11380055.1
(22) Date of filing: 17.06.2011
(51) Int. Cl.: B32B 29/08, B32B 3/28, B32B 9/02, B65D 5/02, B65D 5/50

(54) **Corrugated carboard sheet for the manufacturing of boxes**

(30) Priority: 06.07.2010 ES 201000871
(71) Applicant: Sanlucar Fruit S.L., 46530 Puzol Valencia (ES)
(72) Inventor: Navarro Mechó, José Francisco, 46530 Puzol Valencia (ES)
(74) Representative: Gonzalez Palmero, Fé

(57) **Abstract**

Structured as conventional sheets of this type, using three or five layers of cardboard, in the case of five layers three of them are flat paper between which two corrugated paper sheets are placed alternately, focusing its characteristics in the fact that both the two layers of corrugated paper with at least two of the flat paper layers, the intermediate and the one corresponding with the exterior of the box, are obtained from Nordic semi-chemical paper of short white fibre, material that can also constitute the layer corresponding to the outer surface of the box, thus achieving higher mechanical resistance, lighter weight and a reduction in costs compared to conventional sheets using flat layers of Kraft paper and corrugated layers of semi-chemical paper. In the case of sheets of three layers, the external layers match the previous ones, and the intermediate layers match one of the corrugated paper ones.

## Description

### OBJECT OF THE INVENTION

The present invention relates to a corrugated cardboard sheet like the ones used in the manufacturing of boxes, for example boxes for packaging fresh produce.

The object of the invention is to obtain a cardboard sheet of the same or greater strength than conventional cardboard sheets, but with less weight and a significant decrease in production costs.

The invention is therefore placed in the field of the cardboard industry.

### BACKGROUND OF THE INVENTION

At present and for the manufacturing of cardboard boxes with applications as the ones mentioned above, corrugated cardboard plates involving three or five layers are used, specifically the following:
Five layers:
   - A Kraft paper material, designed to come into contact with the product and, consequently establishing the inner layer of the wall of the box.
   - A layer of semi-chemical corrugated paper.
   - Kraft paper
   - A layer of semi-chemical corrugated paper
   - A Kraft paper forming the outer surface of the wall of the box
Three layers:
   - A Kraft paper material, designed to come into contact with the product and, consequently establishing the inner layer of the wall of the box.
   - A layer of semi-chemical corrugated paper.
   - A Kraft paper forming the outer surface of the wall of the box.

Also, corrugated cardboard sheets are being used in which the Kraft paper of the intermediate layer is replaced by semi-chemical corrugated paper, only in the case of five layers sheets.

These denominations are commonly used in the cardboard industry but in any case Kraft paper should be seen as pure virgin fibre paper and semi-chemical paper should be one that during its manufacture, the separation or dissolution of vegetable fibres takes place to obtain the paste by two procedures: a boiling process using chemicals and a mechanical fibre separation process.

The use of semi-chemical paper in the inner layers is determined because this paper allows the corrugation, which does not happen with Kraft paper.

Kraft paper utilization in the outer layers is determined both by the need for the wall of the slit to be resistant to moisture (inside and out), and by the graphic printing needs particularly in its outer side, benefits not offered by the semi-chemical paper.

As a result of the above mentioned, the cardboard sheets currently manufactured represent a level of costs, both due to its manufacturing and its printing, which is desirable to reduce.

### DESCRIPTION OF THE INVENTION

The new corrugated cardboard sheet for the manufacturing of boxes that the invention proposes, allows the achievement of the objective mentioned in the paragraph above.

For this, and in a more precise way, starting from the conventional structure for cardboard sheets made with five or three layers, the invention consists of structuring at least four of them in the first case and two in the second, in particular the three intermediate layers and the outer layer also corresponding to the area of the box in the first case and the middle and the said outer layer in the second case, based on Nordic semi-chemical paper, which is a paper made from 100% virgin birch fibre.

More precisely, said layers of Nordic semi-chemical paper should be of a short and white fibre.

Optionally, the three or five layers constituting the cardboard sheet can be Nordic semi-chemical, as this paper is a light beige, which allows printing and which represents considerable cost savings compared to conventional sheets in which the outer layer is of white Kraft, of a significantly higher price, not being possible the utilization of raw Kraft, because its colour is a very dark brown which does not allow quality graphic prints.

In any case, the layer of Nordic semi-chemical paper inside the box should be covered with paraffin approved for contact with the packaged product, obviously in order to prevent the moisture that can spread from the product to affect the paper.

The Nordic semi-chemical paper is not only cheaper than Kraft paper, but it is also more resistant, thus achieving a better performance in the vertical stresses, once the stacking between boxes is formed, all with a lighter weight of paper for which there is also a weight saving of around 20%.

### DESCRIPTION OF THE DRAWINGS

In order to complement this description and with the object of helping to better understand the characteristics of the invention, according to a preferred example of practical embodiment thereof, a set of drawings has been included as an integral part of said description, wherein the following has been represented in an illustrative and non-limiting manner:
- Figure 1: Shows a schematic sectional piece of a corrugated cardboard sheet for the manufacturing of boxes made in accordance with the present invention, and more specifically in accordance with the alternative embodiment of five layers.
- Figure 2: Shows a representation similar to Figure 1, but for a sheet of cardboard with three layers.

### PREFERRED EMBODIMENT OF THE INVENTION

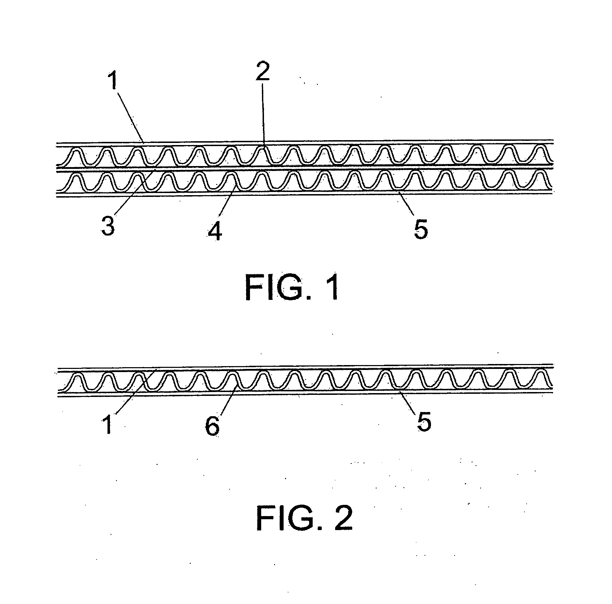

In Figure 1, which as it has just been said, corresponds to the practical embodiment of a five layers sheet, the existence of a first layer of paper (1), in particular a smooth layer of Kraft paper, for what must be the inside of the box, in other words, the surface in contact with the product to be contained, is observed.

Next, a layer (2) of Nordic semi-chemical corrugated paper is laid, then a flat layer (3) of paper also Nordic semi-chemical, then a new layer (4) of corrugated paper of the same nature, and finally the layer (5) that will be constitutive of the outer wall of the box, and is of the same nature as layer (3), in other words, also of Nordic semi-chemical paper.

As previously stated, the layer (1) corresponding to the inside of the box may also be of Nordic semi-chemical paper as the rest, but in this case it must be equipped with wax coating or other similar material that insulates the sheet from the moisture that can spread from the products contained inside the box.

In any case, as previously stated, the Nordic semi-chemical paper must be of short, white fibres, to achieve maximum strength and improve printing conditions in the case of the exterior layer (5).

Turning now to the cardboard sheet of three layers shown in figure 2, in this case there is, as above, a first layer of paper (1), in particular a smooth layer of Kraft paper, corresponding to the inside of the box, establishing then a layer (6) of Nordic semi-chemical corrugated paper, finally completed with another layer of Nordic semi-chemical paper (5), in this case flat, which is what will constitute the outer wall of the box.

As in the previous case, in this case of three layers sheets, all of them can be of Nordic semi-chemical paper, and more particularly of white short fibre.

It should finally be noted that, to the advantages mentioned above, we have to add the advantage of the reduction of costs, due to the fact that, while in the conventional sheets waterproofing treatment applies to the three intermediate layers (in the case of the five layers), or the intermediate layer (in the case of the three layers) as well as the outer layer corresponding to the inner wall of the box, with the invention only the latter should be waterproof, which is a markedly reduction of cost.

## Claims

1. Corrugated cardboard sheet for the manufacturing of boxes, such as the ones that are structured by three or five layers, in the first case two outer layers (1-5) of flat paper and an intermediate layer of corrugated paper(6) and in the second case two outer layers (1-5) of flat paper, an intermediate layer (3) also of flat paper, and between this and the previous ones, two other layers of corrugated paper (2-4), **characterized in that** at least the outer layer (5) corresponding to the outer surface of the box to be made and the intermediate layer or layers (2-3-4) are made of Nordic semi-chemical paper , in other words, of paper made from 100% birch fibre, while the layer (1) intended to form the inner surface of the box is made of Kraft paper.

2. Corrugated cardboard sheet for the manufacturing of boxes, according to claim 1, **characterized in that** the layers of Nordic semi-chemical paper are of white short fibre.

3. Corrugated cardboard sheet for the manufacturing of boxes, according to previous claims, **characterized in that** the three (1-5-6) or five layers (1-2-3-4-5) constituting the sheet are optionally Nordic semi-chemical paper, in which case layer (1) corresponding to the inner surface of the box receives a paraffin treatment or similar which provides a barrier to any possible moisture.
